# EUROPEAN PATENT APPLICATION

(11) **EP 4 793 695 A1**
(43) Date of publication of application: **19.08.2026**
(21) Application number: 24876267.6
(22) Date of filing: 20.08.2024
(51) Int. Cl.: G02F 1/13357, F21V 7/10

(54) **LIGHT-EMITTING STRUCTURE AND MANUFACTURING METHOD THEREFOR, BACKLIGHT MODULE AND DISPLAY DEVICE**

(30) Priority: 13.10.2023 CN 202311326661
(71) Applicant: Huizhou Vision New Technology Co., Ltd., Huizhou, Guangdong 516000 (CN)
(72) Inventor: YANG, Hao, Huizhou, Guangdong 516000 (CN)
(74) Representative: Murgitroyd & Company
(86) International application number: PCT/CN2024/113265
(87) International publication number: WO 2025/077447

(57) **Abstract**

Embodiments of the present disclosure provide a light-emitting structure and a manufacturing method therefor, a backlight module and a display device. The light-emitting structure comprises: a circuit board; a plurality of light-emitting chips, arranged on the circuit board; and a plurality of reflecting parts, arranged on the circuit board, wherein each reflecting part is arranged around a corresponding light-emitting chip so as to reflect the circumferential emergent light of the light-emitting chip.

## Description

This application claims priority to Chinese Application No. 202311326661.9, entitled "LIGHT-EMITTING STRUCTURE AND MANUFACTURING METHOD THEREFOR, BACKLIGHT MODULE AND DISPLAY DEVICE", filed to the China National Intellectual Property Administration on October 13, 2023. The entire disclosures of the above application are incorporated herein by reference.

### TECHNICAL FIELD

The present disclosure relates to a field of optoelectronic display technologies, and more particularly, to a light-emitting structure and manufacturing method therefor, backlight module and display device.

### BACKGROUND

In related technologies, a reflection sheet may be attached to a backlight board to reflect light directed toward the board, thereby improving utilization efficiency of light emitted by light-emitting chips.

### TECHNICAL PROBLEM

However, the reflection sheet couldn't adequately cover areas on the board surrounding the light-emitting chips. Some light emitted by the chips may be absorbed by or escape from these uncovered areas, failing to contribute to light emission display. This results in lower utilization efficiency of emitted light, consequently reducing display brightness and visual effects.

### SUMMARY

Embodiments of the present disclosure provide a light-emitting structure and manufacturing method therefor, backlight module and display device, which could effectively improve utilization efficiency of light emitted by light-emitting chips, thereby enhancing display brightness and visual effects.

In a first aspect, an embodiment of the present disclosure provides a light-emitting structure. The light-emitting structure includes a circuit board, a plurality of light-emitting chips disposed on the circuit board, and a plurality of reflecting parts disposed on the circuit board. Each reflecting part is arranged around a light-emitting chip to reflect a circumferential emergent light emitted by the light-emitting chip.

In some embodiments, the light-emitting chip has a top surface, a bottom surface and a peripheral surface, the bottom surface is disposed toward the circuit board, and the peripheral surface connects the top surface and the bottom surface.

The reflecting part has a first reflective sub-portion surrounding the peripheral surface of the light-emitting chip.

In some embodiments, a surface of the circuit board is provided with a flow guide groove where the light-emitting chips are positioned.

The reflecting part includes a second reflective sub-portion which fills the flow guide groove and covers the bottom surface of the light-emitting chips.

The first reflective sub-portion surrounds the second reflective sub-portion and covers the peripheral surfaces of the light-emitting chips.

In some embodiments, the second reflective sub-portion is adhesively connected to the bottom surface of the light-emitting chip.

In some embodiments, the circuit board includes a substrate layer, a circuit layer, and a solder mask layer which are sequentially stacked.

The flow guide groove includes a first sub-groove portion and a second sub-groove portion which are staggered, and the light-emitting chip is arranged at the staggered part of the first sub-groove portion and the second sub-groove portion.

The first sub-groove portion penetrates through the solder resist layer, the second sub-groove portion sequentially penetrates through the solder mask layer and the circuit layer, in order to form two conductive connection parts arranged at intervals in the circuit layer, and the two conductive connection parts are electrically connected through the light-emitting chip.

In some embodiments, an extending direction of the first sub-groove portion and an extending direction of the second sub-groove portion is vertical or inclined at an angle.

In some embodiments, the light-emitting chip protrudes at least partially outside the flow guide groove.

In some embodiments, a shape of the first sub-slot portion and a shape of the light-emitting chip are matched, and the reflecting part fills the first sub-groove portion and the staggered part of the first sub-groove portion and the second sub-groove portion.

In some embodiments, the first reflective sub-portion covers the peripheral surface of the light-emitting chip, and the first reflective sub-portion and the peripheral surface of the light-emitting chip are attached and connected.

In some embodiments, a minute gap exists between the first reflective sub-portion and the peripheral surface of the light-emitting chip, and the first reflective sub-portion and the peripheral surface of the light-emitting chip are arranged at intervals.

In some embodiments, the light-emitting structure further includes a reflection sheet, the reflection sheet is provided with an avoidance through-hole.

The reflection sheet is arranged on the circuit board.

The light-emitting chip is positioned within the avoidance through-hole.

The reflecting part is at least partially positioned within the avoidance through-hole.

In some embodiments, the light-emitting structure further includes a lens, and the lens is arranged on a side of the reflection sheet far away from the circuit board.

A side of the lens facing the circuit board is provided with a light entrance hole.

The top surface of the light-emitting chip is embedded in the light entrance hole.

In some embodiments, the lens is adhered to the reflection sheet a using lens silicone with a viscosity of 3000 mPa·s to 5000 mPa·s.

In some embodiments, the reflecting part includes thermosetting silicone and titanium dioxide, and a viscosity of the thermosetting silicone is 900 mPa·s to 1100 mPa·s, a mass percentage of the titanium dioxide is 10% to 15%.

In a second aspect, embodiments of the present disclosure provide a method for manufacturing a light-emitting structure, includes following steps.

A plurality of light-emitting chips are arranging on a circuit board.

A plurality of reflecting parts are formed on a side of the circuit board where the light-emitting chips are located, and each reflecting part surrounds one light-emitting chip.

In some embodiments, a surface of the circuit board is provided with a flow guide groove, and the method for manufacturing a light-emitting structure includes following steps.
the light-emitting chips are conductively arranged at the flow guide groove.

The flow guide groove is filled with a fluid reflective medium, the fluid reflective medium flows along the flow guide groove to cover bottom surfaces and peripheral surfaces of the light-emitting chips.

The fluid reflective medium is cured to form the reflecting part.

In some embodiments, after the flow guide groove is filled with a fluid reflective medium, the manufacturing method further includes following steps.

A reflection sheet is arranged on a side of the circuit board where the light-emitting chips are located, the reflection sheet is provided with an avoidance through-hole, the light-emitting chips is positioned within the avoidance through-hole, and the reflecting part is at least partially positioned within the avoidance through-hole.

A lens is arranged on a side of the reflection sheet far away from the circuit board, a side of the lens facing the circuit board is provided with a light entrance hole, and top surfaces of the light-emitting chips is embedded in the light entrance hole.

In some embodiments, the reflecting part has a first reflective sub-portion disposed around the peripheral surface of the light-emitting chip, and the plurality of reflecting parts are formed on a side of the circuit board where the light-emitting chips are located includes following steps.

A dispensing mold is used to dispense adhesive around a peripheral area of the light-emitting chips to form the first reflective sub-portion, wherein the first reflective sub-portion is spaced apart from the peripheral surfaces of the light-emitting chips.

In a third aspect, embodiments of the present disclosure provide a backlight module, includes a backplate and the light-emitting structure according to any of the preceding embodiments.

In a fourth aspect, embodiments of the present disclosure provide a display device, includes a display panel and the aforementioned backlight module.

### BENEFICIAL EFFECTS

According to the embodiment of the present disclosure, the reflecting parts surrounding the light-emitting chips are arranged, and the light emitted by the light-emitting chips is reflected by the reflecting parts. When areas on the circuit board surrounding the light-emitting chips remain exposed-for example, if not covered by the reflection sheet-the reflecting parts could reflect the circumferential emergent light emitted by the light-emitting chips, redirecting this portion of light back into the light-emitting chips and then emitting it from the top side. This prevents this portion of emitted light from irradiating the exposed areas of the circuit board, avoiding absorption or escape of the circumferential emergent light emitted by the light-emitting chips through these exposed areas. Consequently, all or at least most of the light emitted by the light-emitting chips is emitted from the top side and used for display, thereby improving the utilization of the light emitted by the light-emitting chips.

### BRIEF DESCRIPTION OF DRAWINGS

To clarify the technical solutions in the present disclosure embodiments, the following briefly introduces accompanying drawings for describing the embodiments. Obviously, the described drawings represent only some embodiments of the present disclosure. Those skilled in the art may obtain other drawings based on these illustrations without creative effort.
FIG. 1 is a cross-sectional structural diagram of a light-emitting structure according to an embodiment of the present disclosure.
FIG. 2 is a locally enlarged structure of the light-emitting structure in FIG. 1.
FIG. 3 is a partial structure of a light-emitting structure according to an embodiment of the present disclosure.
FIG. 4 is a projection diagram of a circuit board in a light-emitting structure according to an embodiment of the present disclosure.
FIG. 5 is a projection structure of a light-emitting structure according to an embodiment of the present disclosure.
FIG. 6 is a partial structure of a light-emitting structure according to another embodiment of the present disclosure.
FIG. 7 is a process diagram illustrating the placement of a light-emitting chip in a fabrication method of a light-emitting structure according to an embodiment of the present disclosure.
FIG. 8 is a process diagram illustrating the filling of fluid reflective medium in a fabrication method of a light-emitting structure according to an embodiment of the present disclosure.
FIG. 9 is a process diagram illustrating the attachment of a reflection sheet in a fabrication method of a light-emitting structure according to an embodiment of the present disclosure.

### Reference numerals:

10-circuit board, 11-substrate layer, 12-circuit layer, 13-solder mask layer, 14-flow guide groove, 141-first sub-groove portion, 142-second sub-groove portion, 20-light-emitting chip, 21-top surface, 22-bottom surface, 23-peripheral surface, 30-reflecting part, 31-first reflective sub-portion, 32-second reflective sub-portion, 30'-fluid reflective medium, 40-reflection sheet, 41-avoidance through-hole, 50-lens, 51-light entrance hole, 60-solder joint.

### DETAILED DESCRIPTION

The technical solutions in the embodiments of the present disclosure will be described clearly and completely below with reference to the accompanying drawings. It is apparent that the described embodiments are only part of the embodiments of the present disclosure rather than all of them. All other embodiments obtained by those skilled in the art based on the embodiments of the present disclosure without creative efforts shall fall within the protection scope of the present disclosure.

In the description of the present disclosure, it should be understood that orientation or positional relationships indicated by terms such as "center", "longitudinal", "transverse", "length", "width", "thickness", "upper", "lower", "front", "rear", "left", "right", "vertical", "horizontal", "top", "bottom", "inner", "outer" are based on orientation or positional relationships shown in the accompanying drawings, which are merely for facilitating description of the present disclosure and simplifying the description, rather than indicating or implying that the referred devices or elements must have specific orientations or be constructed or operated in specific orientations. Therefore, they should not be construed as limiting the present disclosure. Furthermore, terms "first" and "second" are used for descriptive purposes only and should not be construed as indicating relative importance or implicitly indicating the number of technical features. Thus, features defined with "first" or "second" may explicitly or implicitly include one or more of the features. In the description of the present disclosure, "a plurality of" means two or more unless specifically defined otherwise.

"A and/or B" includes the following three combinations: only A, only B, and a combination of A and B.

The use of "adapted to" or "configured to" in the present disclosure implies open and inclusive language that does not exclude devices being adapted to or configured to perform additional tasks or steps. Additionally, the use of "based on" indicates openness and inclusiveness, as processes, steps, calculations or other actions "based on" one or more stated conditions or values may in practice be based on additional conditions or values beyond those stated.

In the present disclosure, the term "exemplary" is used to mean "serving as an example, instance, or illustration." Any embodiment described as "exemplary" in the present disclosure is not necessarily to be construed as preferred or advantageous over other embodiments. The following description is presented to enable any person skilled in the art to make and use the present disclosure. In the following description, details are set forth for explanation purposes. It will be apparent to persons of ordinary skill in the art that the present disclosure may be practiced without these specific details. In other instances, well-known structures and processes are not elaborated in detail to avoid obscuring the description of the present disclosure with unnecessary details. Therefore, the present disclosure is not intended to be limited to the embodiments shown, but is to be accorded the widest scope consistent with the principles and features disclosed herein.

In related art, an avoidance hole needs to be provided on a reflection sheet corresponding to a light-emitting chip to avoid the light-emitting chips. To ensure the safety of devices during an assembly process, a clearance fit should be set between the avoidance hole and the light-emitting chips reserving a certain fit clearance between the hole wall of the avoidance hole and the light-emitting chip. Due to a presence of this fit clearance, areas on the light board surrounding the light-emitting chips are exposed outside the reflection sheet. As a result, light emitted from the peripheral sides of the light-emitting chip could directly irradiate the light board, where it is either absorbed or escapes by passing through the board, failing to be used for light emission and display. This leads to low utilization of the light emitted by the light-emitting chip, thereby reducing display brightness and visual effects.

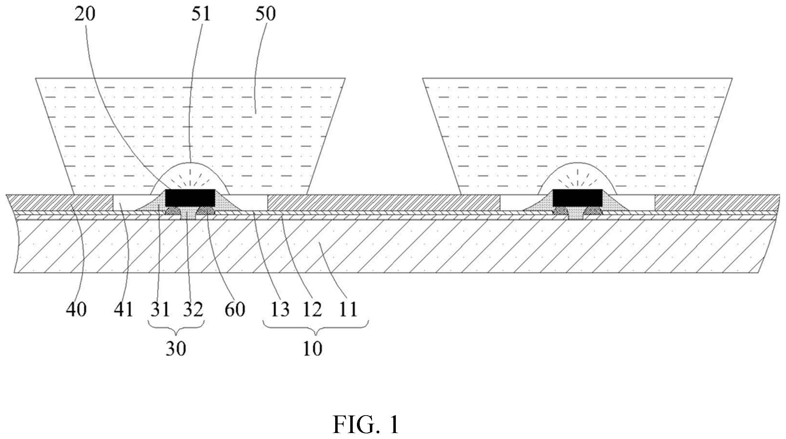

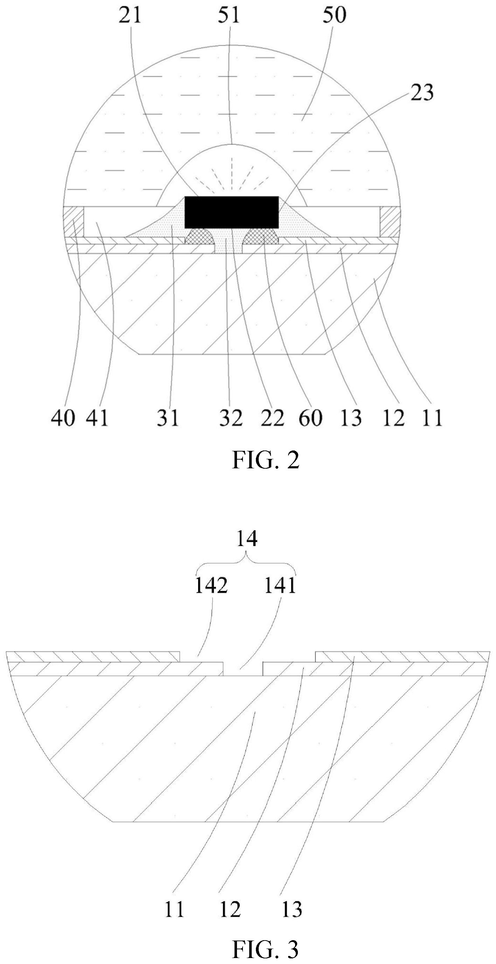

As shown in FIG. 1 and FIG. 2, in a first aspect, embodiments of the present disclosure provide a light-emitting structure. The light-emitting structure includes a circuit board 10, a plurality of light-emitting chips 20, and a plurality of reflecting parts 30, which could effectively improve the utilization of light emitted by the light-emitting chips 20, thereby enhancing display brightness and visual effects.

A type of circuit board 10 could be determined based on actual needs, such as rigid printed circuit board (PCB), flexible printed circuit (FPC), etc. Embodiments of the present disclosure impose no limitation in this regard.

The light-emitting chips 20 are disposed on the circuit board 10 and emit light when powered on. A type of light-emitting chips 20 could be determined based on actual needs, such as Mini LED chips, Micro LED chips, etc. Embodiments of the present disclosure impose no limitation in this regard.

The reflecting parts 30 are disposed on the circuit board 10, with each reflecting part 30 is arranged around a light-emitting chip 20 to reflect a circumferential emergent light emitted by the light-emitting chip 20. The reflecting part 30 is made of a reflective medium with high reflectivity to the light emitted by the light-emitting chip 20. In some embodiments, the reflectivity of the reflective medium used for the reflecting part 30 to the light emitted by the light-emitting chip 20 is not less than 90%, preferably over 95%. It should be noted that the reflecting part 30 do not obstruct a top side of the light-emitting chip 20, keeping the top side exposed for top-side light emission.

Thus, when areas on the circuit board 10 surrounding the light-emitting chips 20 remain exposed-for example, if not covered by a reflection sheet 40-the reflecting parts 30 could prevent the circumferential emergent light emitted by the light-emitting chips 20 from irradiating these exposed areas of the circuit board 10. This avoids an absorption or escape of the light emitted by the light-emitting chips 20 through these exposed areas, ensuring that all or at least most of the light emitted by the light-emitting chips 20 is emitted from the top side, thereby improving the utilization of the light emitted by the light-emitting chips 20.

Compared with related art, embodiments of the present disclosure provide a light-emitting structure equipped with reflecting parts 30 surrounding the light-emitting chips 20. When areas on the circuit board 10 surrounding the light-emitting chips 20 remain exposed-for example, if not covered by the reflection sheet 40-the reflecting parts 30 could reflect the circumferential emergent light emitted by the light-emitting chips 20, redirecting this portion of light back into the light-emitting chips 20 and then emitting it from the top side. This prevents this portion of emitted light from irradiating the exposed areas of the circuit board 10, avoiding absorption or escape of the circumferential emergent light emitted by the light-emitting chips 20 through these exposed areas. Consequently, all or at least most of the light emitted by the light-emitting chips 20 is emitted from the top side and used for display, thereby improving the utilization of the light emitted by the light-emitting chips 20.

In some embodiments, the light-emitting chip 20 may have a top surface 21, a bottom surface 22, and a peripheral surface 23. The bottom surface 22 faces the circuit board 10, and the peripheral surface 23 connects the top surface 21 and the bottom surface 22. The light-emitting chip 20 could emit light through the top surface 21, the bottom surface 22, and the peripheral surface 23. Here, light emitted through the top surface 21 constitutes top-side emission, while light emitted through the peripheral surface 23 constitutes circumferential emission. In some embodiments, positive and negative electrodes may be provided on the bottom surface 22 of the light-emitting chip 20, which are soldered and fixed to the circuit board 10 via solder portions.

Here, the reflecting part 30 may have a first reflection sub-portion 31. The first reflection sub-portion 31 is arranged around the peripheral surface 23 of the light-emitting chip 20 to reflect light emitted from the peripheral surface 23 of the light-emitting chip 20.

In some embodiments, the first reflective sub-portion 31 may directly cover the peripheral surface 23 of the light-emitting chip 20, forming direct contact therebetween. When the light-emitting chip 20 emits light, the light exiting from its peripheral surface 23 could directly irradiate the first reflective sub-portion 31. The first reflective sub-portion 31 could efficiently reflect this portion of light back into the light-emitting chip 20 through its peripheral surface 23, enabling subsequent light emission display through the top side of the light-emitting chip 20, thereby improving utilization efficiency of the light-emitting chip 20.

In other embodiments, a minute gap may exist between the first reflective sub-portion 31 and the peripheral surface 23 of the light-emitting chip 20, creating closely spaced separation. When the light-emitting chip 20 emits light, the light exiting from its peripheral surface 23 could sequentially pass through both the peripheral surface 23 and the minute gap to reach the first reflective sub-portion 31. The first reflective sub-portion 31 could efficiently reflect this light either back into the chip through its peripheral surface 23 or allow upward emission through the minute gap's upper opening away from the circuit board 10, thereby improving utilization efficiency of the light-emitting chip 20.

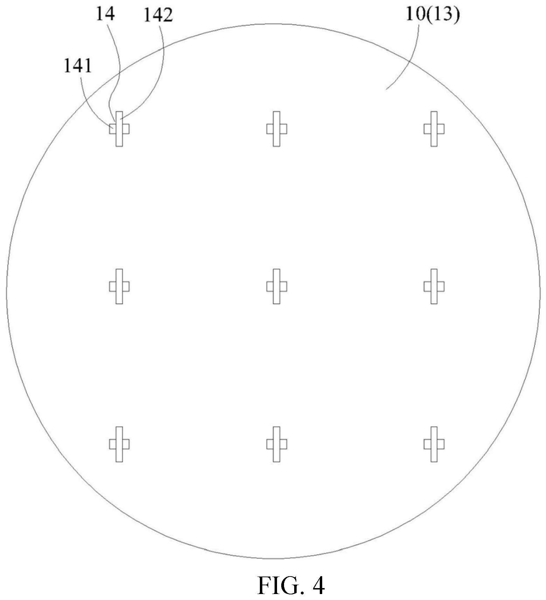

As shown in FIG. 1 to FIG. 5, in some embodiments, a surface of the circuit board 10 may be provided with a flow guide groove 14 where the light-emitting chips 20 are positioned. The reflecting part 30 may include a second reflective sub-portion 32 that fills the flow guide groove 14 and covers the bottom surface 22 of the light-emitting chips 20. The first reflective sub-portion 31 surrounds the second reflective sub-portion 32 and covers the peripheral surfaces 23 of the light-emitting chips 20.

Here, the second reflective sub-portion 32 is adhesively connected to the bottom surface 22 of the light-emitting chip. When the light-emitting chip 20 emits light, the light exiting from its bottom surface 22 directly irradiates the second reflective sub-portion 32, which efficiently reflects this light back into the light-emitting chip 20 through its bottom surface 22 for subsequent the top surface 21 emission. In this way, the light-emitted from the bottom surface 22 of the light-emitting chip 20 could be prevented from irradiating an area below the light-emitting chip 20 on the circuit board 10, and this part of the light could be prevented from being absorbed by or escaping from the exposed area of the circuit board 10. On the contrary, all or at least most of the light emitted by the light-emitting chip 20 could be emitted from the top surface 21 of the light-emitting chip 20, thereby improving utilization efficiency of the light-emitting chip 20.

The flow guide groove 14 on the circuit board 10 facilitate precise formation of the reflecting part 30 with the first reflective sub-portion 31 and the second reflective sub-portion 32, ensuring accurate coverage of the bottom surface 22 and the peripheral surface 23 of the light-emitting chip 20 while leaving the top surface 21 exposed. A size of the flow guide groove 14 matches that of the light-emitting chip 20. When the light-emitting chip 20 is a micro chip such as a Mini LED chip or a Micro LED chip, the flow guide groove 14 could be regarded as a capillary and has a capillary effect. In this way, the fluid reflective medium 30' could be injected into an end of the flow guide groove 14 by dispensing glue, spraying, etc., and the fluid reflective medium 30' will receive obvious surface tension in the flow guide groove 14, and gradually fill the corresponding area of the flow guide groove 14 along the flow guide groove 14 under the surface tension, and then expand to cover the bottom surface 22 and the peripheral surface 23 of the light-emitting chip 20. Here, a filling amount of the fluid reflective medium 30' could be controlled according to the size of the flow guide groove 14, so that the fluid reflective medium 30' just covers the bottom surface 22 and the peripheral surface 23 of the light-emitting chip 20, but does not cover the top surface 21 of the light-emitting chip 20. The first reflective sub- portion 31 and the second reflective sub- portion 32 thus formed are directly attached to a surface of the light-emitting chip 20, respectively, and the reflecting part 30 has a better reflection effect.

Combined implementation of the first reflective sub-portion 31 and the second reflective sub- portion 32 ensures both the bottom surface 22 and the peripheral surface 23 of the light-emitting chip 20 are complete covered by the reflecting part 30. This prevents the light emitted by the light-emitting chip 20 from its bottom surface 22 and peripheral surface 23 from illuminating the exposed areas below and around the light-emitting chip 20 on the circuit board 10, thereby avoiding absorption or escape of the light emitted by the light-emitting chip 20 through these exposed areas. Consequently, all or at least most of the light emitted by the light-emitting chip 20 is emitted from the top side, thereby improving the utilization of the light emitted by the light-emitting chips 20.

A layered structure of the circuit board 10 could be flexibly designed, including options like single-layer board or multi-layer board, this embodiment imposes no limitations. In some embodiments, the circuit board 10 may include a substrate layer 11, a circuit layer 12, and a solder mask layer 13 which are sequentially stacked. A material of the substrate layer 11 could be determined according to actual needs, and it could be of epoxy resin material, aluminum foil material, glass fiber, etc., which is not limited by the embodiment of the present disclosure. The circuit layer 12 is made of a conductive material by patterning, which is a wiring part of the circuit board 10, and could be made of a material type such as copper material, which is not limited by the present disclosure. The solder mask layer 13 protects the circuit layer 12 from oxidation damage by solder resist. Here, the solder resist layer 13 could be disposed on the circuit layer 12 by ink printing. For example, the solder resist layer 13 could be made of white ink with high reflectivity for light emission of the light-emitting chip 20, and its reflectivity could be above 90%.

The flow guide groove 14 may include a first sub-groove portion 141 and a second sub-groove portion 142 which are staggered, and the light-emitting chip 20 is arranged at the staggered part of the first sub-groove portion 141 and the second sub-groove portion 142. The first sub-groove portion 141 penetrates through the solder resist layer 13, and a surface on the circuit layer 12 far from the substrate layer 11 could be used as a groove bottom surface of the first sub-groove portion 141. The second sub-groove portion142 sequentially penetrates through the solder mask layer 13 and the circuit layer 12, in order to form two conductive connection parts arranged at intervals in the circuit layer 12. One surface of the substrate layer 11 close to the circuit layer 12 could be used as a bottom surface of the second sub-groove portion 142, and the two conductive connection parts are electrically connected through the light-emitting chip 20. For example, the conductive connection part may form a pad, and the bottom surface 22 of the light-emitting chip 20 may be provided with a positive electrode and a negative electrode, which may be welded and fixed to the pad through a soldering part 60 respectively.

After the light-emitting chip 20 is conductively connected with the two conductive connection parts, the light-emitting chip 20 will be located at the staggered part of the first sub-groove portion 141 and the second sub-groove portion142. In this way, when the fluid reflective medium 30' spreads to fill the flow guide groove 14 based on the surface tension, the fluid reflective medium 30' could flow and expand along the first sub-groove portion 141 and the second sub-groove portion 142, and gradually cover the bottom surface 22 and the peripheral surface 23 of the light-emitting chip 20 in a process of filling the first sub-groove portion 141 and the second sub-groove portion 142, thereby forming the required first reflective sub-portion 31 and the second reflective sub-portion 32. Illustratively, the peripheral surface 23 includes four side surfaces arranged in sequence. Here, the fluid reflective medium 30' could be injected into both ends of the second sub-groove portion 142, so that the fluid reflective medium 30' gradually flows from both ends of the second sub-groove portion 142 to the staggered part of the first sub-groove portion 141 and the second sub-groove portion 142, and in the process, the fluid reflective medium 30' gradually covers the bottom surface 22 of the light-emitting chip 20 and two opposite side surfaces on the peripheral side surface 23. Furthermore, the fluid reflective medium 30' could flow from the staggered part of the first sub-groove portion 141 and the second sub-groove portion 142 to both ends of the first sub-groove portion 141, so that the other two side surfaces on the peripheral side surface 23 are covered.

An extending direction of the first sub-groove portion 141 and an extending direction of the second sub-groove portion 142 may be vertical or inclined at an angle. Here, the extending direction of the first sub-groove portion 141 may be a longitudinal direction of the first sub-groove portion 141, and the extending direction of the second sub-groove portion 142 may be a longitudinal direction of the second sub-groove portion 142. For example, a shape of the first sub-slot portion 141 and a shape of the light-emitting chip 20 are matched, and the reflecting part 30 fills the first sub-groove portion 141 and the staggered part of the first sub-groove portion 141 and the second sub-groove portion 142.

Illustratively, the light-emitting chip 20 may protrude at least partially outside the flow guide groove 14. For example, the light-emitting chip 20 may be entirely located within the flow guide groove 14. Alternatively, the light-emitting chip 20 may be partially embedded within the flow guide groove 14 while a remaining portion protrudes outside. Through such arrangement, it could effectively prevent the fluid reflective medium 30' from flowing onto the top surface 21 of the light-emitting chip 20, thereby avoiding reflective obstruction on the top surface 21 and ensuring normal light emission from the top surface 21.

A material of the fluid reflective medium 30' used for the reflecting part 30 could be determined based on practical needs, the embodiments of the present disclosure do not limit this. In some embodiments, the reflecting part 30 may include thermosetting silicone and titanium dioxide. Here, a viscosity of the thermosetting silicone could range from 900 mPa·s to 1100 mPa·s, such as 900 mPa·s, 925 mPa·s, 950 mPa·s, 980 mPa·s, 1000 mPa·s, 1030 mPa·s, 1050 mPa·s, 1075 mPa·s, or 1100 mPa·s. A mass percentage of the titanium dioxide could range from 10% to 15%, such as 10%, 10.5%, 11%, 11.5%, 12%, 12.4%, 12.8%, 13.2%, 13.6%, 14%, 14.5%, or 15%.

As shown in FIG. 1 to FIG. 6, in some embodiments, the light-emitting structure may further include a reflection sheet 40. The reflection sheet 40 is provided with an avoidance through-hole 41, the reflection sheet 40 is arranged on the circuit board 10, the light-emitting chip 20 is positioned within the avoidance through-hole 41, while the reflecting part 30 is at least partially positioned within the avoidance through-hole 41. Here, the reflection sheet 40 could shield most areas of the circuit board 10, so that most of the light irradiated to the circuit board 10 are reflected by the reflection sheet 40, and these lights are displayed after being reflected, thereby enhancing the utilization of light emitted from the light-emitting chip 20. For exposed areas of the circuit board 10 within the avoidance through-hole 41 that are not shielded by the reflection sheet 40, the reflecting part 30 could reflect light directed toward these areas, and these lights are displayed after being reflected, thereby enhancing the utilization of light emitted from the light-emitting chip 20. Illustratively, the reflecting part 30 may include the aforementioned first reflective sub-portion 31 disposed within the avoidance through-hole 41. Alternatively, the reflecting part 30 may may include both the first reflective sub-portion 31 and the second reflective sub-portion 32, with the first reflective sub-portion 31 within the avoidance through-hole 41 and the second first reflective sub-portion 32 positioned below it.

In some embodiments, the light-emitting structure may further include a lens 50. The lens 50 is arranged on a side of the reflection sheet 40 far away from the circuit board 10, and a side of the lens 50 facing the circuit board 10 is provided with a light entrance hole 51, and the top surface 21 of the light-emitting chip 20 is embedded in the light entrance hole 51. Here, the lens 50 may be adhered to the reflection sheet 40 using adhesives such as transparent optical adhesive or transparent silicone. Illustratively, a viscosity of the transparent silicone could range from 3000 mPa·s to 5000 mPa·s. A type of lens 50 could be determined based on practical needs, such as refractive lense or reflective lense, the embodiments of the present disclosure do not limit this.

Since the lens 50 is arranged on the surface of the reflection sheet 40 far away from the circuit board 10, no space needs to be reserved for lens penetration at the avoidance through-hole 41. Thus, when designing an aperture of the avoidance through-hole 41, only the matching relationship between the avoidance through-hole 41 and the light-emitting chip 20 needs to be considered, allowing the aperture of the avoidance through-hole 41 to be significantly minimized. This reduces an exposed area at the avoidance through-hole 41 on the circuit board 10, further decreasing the proportion of light emitted by the light-emitting chip 20 absorbed or escaping, hereby enhancing the utilization of light emitted from the light-emitting chip 20.

In a second aspect, the embodiments of the present disclosure provide a manufacturing method for a light-emitting structure, which includes step S10-S20.

In step S10, a plurality of light-emitting chips 20 are arranged on a circuit board 10. Here, solder paste may first be printed on the circuit board 10, then the light-emitting chips 20 are mounted using a chip mounter machine or die bonder, followed by reflow soldering to fix the light-emitting chips 20 to the circuit board 10.

In step S20, a plurality of reflecting parts 30 are formed on a side of the circuit board 10 where the light-emitting chips 20 are located. Each reflecting part 30 surrounds one light-emitting chip 20.

In some embodiments, a surface of the circuit board 10 may be provided with a flow guide groove 14. Here, the manufacturing method may include step S101-S202.

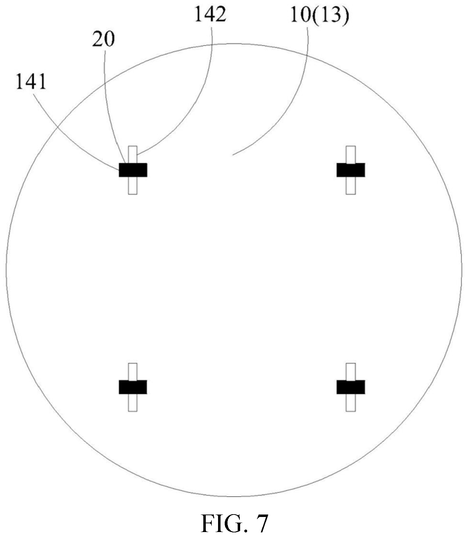

In step S101, as shown in FIG. 7, the light-emitting chips 20 are conductively arranged at the flow guide groove 14. Here, solder paste may first be printed in the flow guide groove 14, then the light-emitting chips 20 are mounted using a chip mounter machine or die bonder, followed by reflow soldering to fix the light-emitting chips 20 to the circuit board 10.

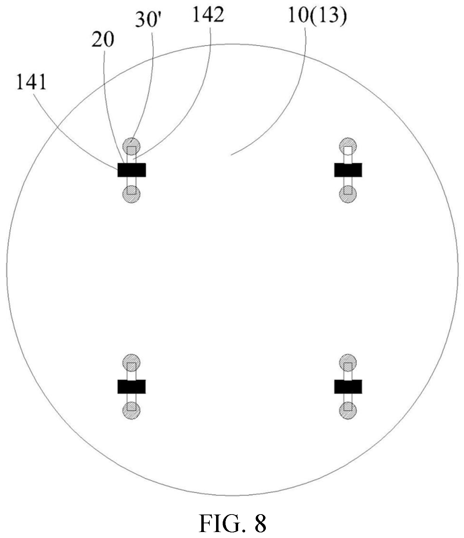

In step S201, as shown in FIG. 8, a fluid reflective medium 30' is filled in the flow guide groove 14, so that the fluid reflective medium 30' flows along the flow guide groove 14 to cover bottom surfaces 22 and peripheral surfaces 23 of the light-emitting chips 20. Here, a capillary action of the flow guide groove 14 could be utilized to enable the fluid reflective medium 30' to flow along the flow guide groove 14 under surface tension, gradually filling the corresponding area of the flow guide groove 14, thereby covering the bottom surfaces 22 and the peripheral surfaces 23 of the light-emitting chips 20. A filling amount of the fluid reflective medium 30' could be controlled based on a size of the flow guide groove 14, ensuring that it precisely covers the bottom surfaces 22 and the peripheral surfaces 23 of the light-emitting chip s 20 without covering a top surface 21.

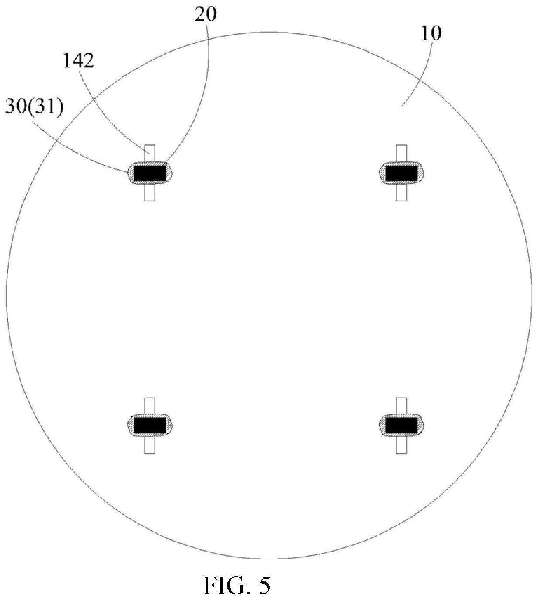

In step S202, as shown in FIG. 5, the fluid reflective medium 30' is cured to form the reflecting part 30. Here, an appropriate curing method could be selected based on characteristics of the fluid reflective medium 30', such as room-temperature curing, light curing, or baking curing, the embodiments of the present disclosure are not limited in this regard. For example, constant-temperature baking could be performed within a preset temperature range for a preset duration to cure the fluid reflective medium 30'.

In other embodiments, when no flow guide groove 14 is provided on the surface of the circuit board 10, a dispensing mold could be used to dispense adhesive around a peripheral area of the light-emitting chips 20 to form the first reflective sub-portion 31 spaced apart from the peripheral surfaces 23 of the light-emitting chips 20. This ensures that the reflecting part 30 is precisely formed around the periphery of the light-emitting chips 20, preventing accidental blockage of the top surface of the light-emitting chips 20 during formation.

In some embodiments, after the step S201, the manufacturing method may further include step S212-S213.

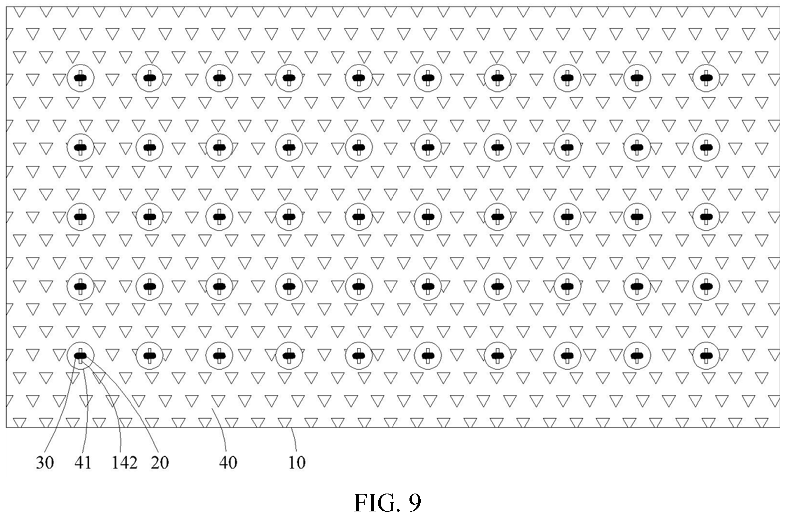

In step S212, as shown in FIG. 9, a reflecting sheet 40 is arranged on a side of the circuit board 10 where the light-emitting chips 20 are located. The reflection sheet 40 is provided with an avoidance through-hole 41, the light-emitting chip 20 is positioned within the avoidance through-hole 41, while the reflecting part 30 is at least partially positioned within the avoidance through-hole 41. Here, the reflection sheet 40 could be attached to the circuit board 10 using methods such as adhesive bonding or electrostatic adsorption.

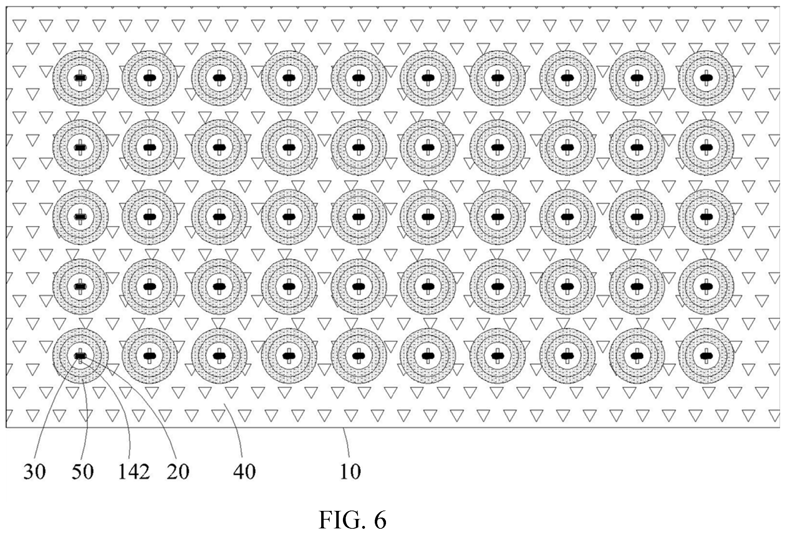

In step S213, as shown in FIG. 6, a lens 50 is arranged on a side of the reflection sheet 40 far away from the circuit board 10. A side of the lens 50 facing the circuit board 10 is provided with a light entrance hole 51, and the top surfaces 21 of the light-emitting chips 20 is embedded in the light entrance hole 51. Here, the lens 50 could be bonded to the reflection sheet 40 using adhesives such as transparent optical adhesive or transparent silicone.

Here, step S212-S213 could be performed either before or after step S202, and the embodiments of the present disclosure are not limited in this regard. When step S212-S213 are performed before S202, the adhesive for the lens 50 and the reflection sheet 40 could be cured together during step S202.

As shown in FIG. 1 to FIG. 6, in a third aspect, the embodiments of the present disclosure provide a backlight module, which includes a backplate and the light-emitting structure from any of the above embodiments, with the circuit board 10 disposed on the backplate. A type of the backlight module could be determined based on actual needs, such as a direct-lit backlight module, and the embodiments of the present disclosure are not limited in this regard. Accordingly, the backlight module may include corresponding structures based on the module type, which will not be elaborated here.

In a fourth aspect, the embodiments of the present disclosure provide a display device, which includes a display panel and the above backlight module, with the top surface 21 of the light-emitting chip 20 facing the display panel. A type of the display device could be determined based on actual needs, such as televisions, monitors, smart terminals, or other products or components with display functions, and the embodiments of the present disclosure are not limited in this regard.

The above present disclosure has provided a detailed introduction to the light-emitting structure and manufacturing method therefor, backlight module and display device. Specific examples are used herein to explain the present disclosure's principles and implementation. The description of the above embodiments is intended only to aid in understanding the present disclosure's methods and core concepts. Meanwhile, for those skilled in the art, based on the present disclosure's ideas, changes may arise in specific implementations and application scopes. In summary, the content of this specification should not be construed as limiting the present disclosure.

## Claims

1. A light-emitting structure, comprising:
a circuit board;
a plurality of light-emitting chips disposed on the circuit board;
a plurality of reflecting parts disposed on the circuit board;
wherein each reflecting part is arranged around a light-emitting chip to reflect a circumferential emergent light emitted by the light-emitting chip.

2. The light-emitting structure according to claim 1, wherein the light-emitting chip has a top surface, a bottom surface and a peripheral surface, the bottom surface being disposed toward the circuit board, and the peripheral surface connects the top surface and the bottom surface;
wherein the reflecting part has a first reflective sub-portion surrounding the peripheral surface of the light-emitting chip.

3. The light-emitting structure according to claim 2, wherein a surface of the circuit board is provided with a flow guide groove where the light-emitting chips are positioned;
wherein the reflecting part comprises a second reflective sub-portion which fills the flow guide groove and covers the bottom surface of the light-emitting chips;
wherein the first reflective sub-portion surrounds the second reflective sub-portion and covers the peripheral surfaces of the light-emitting chips.

4. The light-emitting structure according to claim 3, wherein the second reflective sub-portion is adhesively connected to the bottom surface of the light-emitting chip.

5. The light-emitting structure according to claim 3, wherein the circuit board comprises a substrate layer, a circuit layer, and a solder mask layer which are sequentially stacked;
wherein the flow guide groove comprises a first sub-groove portion and a second sub-groove portion which are staggered, and the light-emitting chip is arranged at the staggered part of the first sub-groove portion and the second sub-groove portion;
wherein the first sub-groove portion penetrates through the solder resist layer, the second sub-groove portion sequentially penetrates through the solder mask layer and the circuit layer, in order to form two conductive connection parts arranged at intervals in the circuit layer, and the two conductive connection parts are electrically connected through the light-emitting chip.

6. The light-emitting structure according to claim 5, wherein an extending direction of the first sub-groove portion and an extending direction of the second sub-groove portion is vertical or inclined at an angle.

7. The light-emitting structure according to claim 5, wherein the light-emitting chip protrudes at least partially outside the flow guide groove.

8. The light-emitting structure according to claim 5, wherein a shape of the first sub-slot portion and a shape of the light-emitting chip are matched, and the reflecting part fills the first sub-groove portion and the staggered part of the first sub-groove portion and the second sub-groove portion.

9. The light-emitting structure according to claim 2, wherein the first reflective sub-portion covers the peripheral surface of the light-emitting chip, and the first reflective sub-portion and the peripheral surface of the light-emitting chip are attached and connected.

10. The light-emitting structure according to claim 2, wherein a minute gap exists between the first reflective sub-portion and the peripheral surface of the light-emitting chip, and the first reflective sub-portion and the peripheral surface of the light-emitting chip are arranged at intervals.

11. The light-emitting structure according to claim 1, further comprising a reflection sheet;
wherein the reflection sheet is provided with an avoidance through-hole;
wherein the reflection sheet is arranged on the circuit board;
wherein the light-emitting chip is positioned within the avoidance through-hole;
wherein the reflecting part is at least partially positioned within the avoidance through-hole.

12. The light-emitting structure according to claim 11, further comprising a lens;
wherein the lens is arranged on a side of the reflection sheet far away from the circuit board;
wherein a side of the lens facing the circuit board is provided with a light entrance hole;
wherein the top surface of the light-emitting chip is embedded in the light entrance hole.

13. The light-emitting structure according to claim 12, wherein the lens is adhered to the reflection sheet a using lens silicone with a viscosity of 3000 mPa·s to 5000 mPa·s.

14. The light-emitting structure according to claim 1, wherein the reflecting part comprises thermosetting silicone and titanium dioxide;
wherein a viscosity of the thermosetting silicone is 900 mPa·s to 1100 mPa·s;
wherein a mass percentage of the titanium dioxide is 10% to 15%.

15. A method for manufacturing a light-emitting structure, comprising:
arranging a plurality of light-emitting chips on a circuit board;
forming a plurality of reflecting parts on a side of the circuit board where the light-emitting chips are located, each reflecting part surrounding one light-emitting chip.

16. The method for manufacturing a light-emitting structure according to claim 15, wherein a surface of the circuit board is provided with a flow guide groove, and the method for manufacturing a light-emitting structure comprising:
conductively arranging the light-emitting chips at the flow guide groove;
filling the flow guide groove with a fluid reflective medium, allowing the fluid reflective medium to flow along the flow guide groove to cover bottom surfaces and peripheral surfaces of the light-emitting chips;
curing the fluid reflective medium to form the reflecting part.

17. The method for manufacturing a light-emitting structure according to claim 16, after filling the flow guide groove with the fluid reflective medium, further comprising:
arranging a reflection sheet on a side of the circuit board where the light-emitting chips are located, the reflection sheet being provided with an avoidance through-hole, the light-emitting chips being positioned within the avoidance through-hole, and the reflecting part being at least partially positioned within the avoidance through-hole;
arranging a lens on a side of the reflection sheet far away from the circuit board, a side of the lens facing the circuit board being provided with a light entrance hole, and top surfaces of the light-emitting chips being embedded in the light entrance hole.

18. The manufacturing method of the light-emitting structure according to claim 15, wherein the reflecting part has a first reflective sub-portion disposed around the peripheral surface of the light-emitting chip, and the forming a plurality of reflecting parts on a side of the circuit board where the light-emitting chips are located, comprising:
using a dispensing mold to dispense adhesive around a peripheral area of the light-emitting chips to form the first reflective sub-portion, wherein the first reflective sub-portion is spaced apart from the peripheral surfaces of the light-emitting chips.

19. A backlight module, comprising a backplate and the light-emitting structure according to any one of claims 1 to 14.

20. A display device, comprising a display panel and the backlight module according to claim 19.
